# EUROPÄISCHE PATENTSCHRIFT

(11) **EP 2 928 638 B1**
(45) Veröffentlichungstag und Bekanntmachung des Hinweises auf die Patenterteilung: **26.10.2016**
(21) Anmeldenummer: 13834322.3
(22) Anmeldetag: 09.12.2013
(51) Int. Cl.: B23P 21/00, B62D 65/02

(54) **BEARBEITUNGSSTATION FÜR BAUTEILE**
PROCESSING STATION FOR COMPONENTS
STATION DE TRAITEMENT POUR COMPOSANTS

(30) Priorität: 10.12.2012 DE 102012112009
(43) Veröffentlichungstag der Anmeldung: 14.10.2015
(73) Patentinhaber: Dr. Ing. h.c. F. Porsche AG, 70435 Stuttgart (DE)
(72) Erfinder: TEGTMEIER, André, 04827 Machern (DE)
(86) Internationale Anmeldenummer: PCT/EP2013/003703
(87) Internationale Veröffentlichungsnummer: WO 2014/090388

(56) Entgegenhaltungen:
- WO-A1-2008/062033
- AT-B- 411 033
- DE-A1- 4 439 412
- DE-A1-102005 019 688
- JP-A- 2000 177 663
- US-A- 5 160 079
- US-A1- 2004 138 782

## Beschreibung

Die Erfindung betrifft eine Bearbeitungsstation für Bauteile. Hierbei handelt es sich insbesondere um eine Bearbeitungsstation für großflächige Bauteile, zum Beispiel Bauteile einer Fahrzeug-Karosserie, wobei die Bearbeitung in einer weitgehend gegen austretenden Lärm, Staub oder ähnlich abgeschlossenen Bearbeitungskabine erfolgt.

Fertigungs- bzw. Bearbeitungsvorrichtungen für Bauteile von Karosserien sind in unterschiedlicher Ausgestaltung bekannt. Sie umfassen in der Regel neben der eigentlichen Bearbeitungsstation eine Übergabe- oder auch Entnahmestation, wobei diese Stationen untereinander funktionell verbunden sind. In der Regel sind zur Bearbeitung bzw. zur Beschickung - und auch zur Entnahme der zu bearbeitenden Bauteile - Bearbeitungs- und/oder Handhabungsroboter im Einsatz.

Zum Stand der Technik wird auf folgende Druckschriften verwiesen: DE 42 90 927 C2, DE 44 22 380 A1, DE 197 13 860 A1, DE 203 04 022 U1, DE 20 2005 001 780 U1, DE 20 2006 021 053 U1, EP 0 977 651 B1 und EP 1 601 492 B1. Allen aus diesen Druckschriften vorbekannten Vorrichtungen ist gemeinsam, dass mit ihnen versucht wird, Bearbeitungsprozesse zu vereinfachen und zum Teil auch flexibler zu gestalten. Die US 2004/138782 A1 beschreibt eine Bearbeitungsstation für Bauteile, zur Anordnung der Bearbeitungsstation in einer Bearbeitungskabine, wobei die Bearbeitungsstation eine dreh- und schwenkbar angeordnete Aufnahme für ein Bauteil und eine in einer Drehachse der Bearbeitungsstation angeordnete vertikale Trennwand zur Abtrennung eines Bearbeitungsraumes von einer Bestückungs- und Entnahmestelle für Bauteile aufweist. Die Aufnahme ist in der vertikalen Position, zusammen mit der Trennwand, um 180° aus dem Bearbeitungsraum in eine Bestückungs- und Entnahmeposition drehbar.

Aufgabe der Erfindung ist es, neben der angestrebten Vereinfachung einen den oder die Bearbeiter weitgehend entlastende und im Hinblick auf die durchzuführenden Arbeitsprozesse sowie den Beschickungs- und Entnahmeprozess für zu bearbeitende Bauteile optimierte und gegenüber der Umgebung lärm- und staubgeschützten Bearbeitungsstation anzubieten.

Gelöst wird die Aufgabe durch eine Bearbeitungsstation, die gemäß den Merkmalen des Patentanspruchs 1 ausgebildet ist.

Die Bearbeitungsstation für Bauteile ist innerhalb einer Bearbeitungskabine angeordnet. Die Bearbeitungsstation weist eine dreh- und schwenkbar angeordnete Aufnahme für ein Bauteil und eine in einer Drehachse der Bearbeitungsstation angeordnete vertikale Trennwand zur Abtrennung eines Bearbeitungsraumes von einer Bestückungs- und Entnahmestelle für Bauteile auf. Die Aufnahme für das Bauteil ist aus einer vertikalen, im Wesentlichen parallel zur Trennwand verlaufenden Position in die im Wesentlichen horizontale, zur Bearbeitung frei zugängliche Bearbeitungsposition verschwenkbar und umgekehrt. Ferner ist die Aufnahme in der vertikalen Position, zusammen mit der Trennwand, um 180° aus dem Bearbeitungsraum in eine Bestückungs- und Entnahmeposition drehbar.

Derartige Bearbeitungsstationen können für die Serienfertigung von solchen Bauteilen entlang einer Beschickungs- und Entnahmelinie hintereinander angeordnet sein, wobei die Beschickung und die Entnahme der Bauteile über einen entlang der Beschickungs- und Entnahmelinie automatisch gesteuert verfahrbaren Handlungsroboter erfolgen kann.

Entlang einer solchen Beschickungs- und Entnahmelinie können in parallelen Reihen eine Vielzahl solcher Bearbeitungsstationen angeordnet sein.

Grundsätzlich ist es ausreichend, wenn die Bearbeitungsstation eine einzige Aufnahme für ein Bauteil aufweist. Ist dieses Bauteil bearbeitet, wird es, bei Drehung um die Drehachse der Bearbeitungsstation, zur Bestückungs- und Entnahmestelle überführt, dort entnommen, anschließend dort die Bearbeitungsstation mit einem neu zu bearbeitenden Bauteil bestückt und sodann die Bearbeitungsstation erneut verschwenkt, in eine Stellung, in der das zu bearbeitende Bauteil sich innerhalb der Bearbeitungskabine bzw. des Bearbeitungsraums befindet.

Es wird allerdings als bevorzugt angesehen, wenn die Bearbeitungsstation für die gleichzeitige Aufnahme von zwei Bauteilen ausgebildet ist. Während das eine Bauteil bearbeitet wird, kann im Bereich der Bestückungs- und Entnahmestelle ein anderes Bauteil, das bereits bearbeitet worden ist, aus der Bearbeitungsstation entnommen werden und die Bearbeitungsstation mit einem neu zu bearbeitenden Bauteil bestückt werden.

Unter diesem Aspekt wird es als vorteilhaft angesehen, wenn die Bearbeitungsstation auf der der (ersten) Aufnahme abgewandten Seite der Trennwand eine weitere (zweite) Aufnahme für ein weiteres Bauteil aufweist. Die zweite Aufnahme für das weitere Bauteil ist aus einer vertikalen, im Wesentlichen parallel zur Trennwand verfahrbaren Position in eine im Wesentlichen horizontale Position verschwenkbar und umgekehrt. Die zweite Aufnahme ist in der vertikalen Position zusammen mit der Trennwand um 180° von der Bestückungs- und Entnahmestelle in eine Bearbeitungsposition in der Bearbeitungskabine drehbar.

Die Bearbeitungsstation ist somit bezüglich der beiden Aufnahmen derart gestaltet, dass beiden Aufnahmen dieselbe Funktionalität zugeordnet ist. Mit jeder Aufnahme können somit diejenigen Bewegungsprozesse vollführt werden, die zum Bearbeiten des Bauteils und zu dessen Bestücken und Entnehmen erforderlich sind.

Die Aufnahme bzw. die Aufnahmen besteht beispielsweise aus einem gelochten Leichtbauprofil, wobei die Aufnahme ferner vorzugsweise über Justier- und Klemmelemente verfügt, über die das Bauteil ortsfest auf der Aufnahme verspannt bzw. befestigt werden kann.

Die jeweilige Aufnahme weist insbesondere einen Hebel auf, der von einer vertikalen Position in eine horizontale Position geschwenkt werden kann. Dies ermöglicht dem Werker somit die Bearbeitung des Bauteils. Bei diesem handelt es sich beispielsweise um ein Karosserieteil, insbesondere eine Fronthaube eines Personenkraftwagens.

Beim Verschwenken von der vertikalen in die horizontale Position wird die Aufnahme bzw. das daran befestigte Bauteil vorzugsweise zusätzlich noch so verschwenkt, dass das Bauteil dem Werker mit seiner Oberseite entgegen liegt. Hierzu ist vorzugsweise am Hebel in dessen vorderen Bereich noch eine weitere Schwenkeinheit vorgesehen. Darüber hinaus ist auch vorzugsweise ein Drehantrieb in der Art eines Drehtellers vorgesehen, mittels dessen das Bauteil, insbesondere die Fronthaube, in horizontaler Lage vom Werker in Z-Lage verdreht werden kann. Insbesondere ist vorgesehen, dass der Werker mittels Fußschaltersteuerung die Verdrehung des Bauteils, insbesondere der Fronthaube veranlassen kann, um das Bauteil vollständig bearbeiten zu können. Auf den Drehteller kann zusätzlich eine Bremseinrichtung wirken.

Die Trennwand ist, abgesehen von deren tragenden Struktur, vorzugsweise größtenteils aus Plexiglas gebildet. Die Trennwand weist vorzugsweise umlaufend eine Bürstenstruktur auf, mittels der die Bearbeitungskabine staubdicht verschlossen werden kann. Im Inneren der Bearbeitungskabine, bei der es sich insbesondere um eine Bearbeitungskabine handelt, in der geschliffen wird, ist vorzugsweise eine Absaugung vorhanden, die den Staub, der durch das Schleifen entsteht, absaugt. Diese Absaugung erfolgt vorzugsweise nach unten in Richtung des Bodens.

Weitere Merkmale der Erfindung ergeben sich aus den Unteransprüchen, der beigefügten Zeichnung und der Beschreibung der in der Zeichnung wiedergegebenen, bevorzugten Ausführungsbeispiele, ohne hierauf beschränkt zu sein.

Es zeigt:
- Fig. 1 bis 4: in einer schematischen Darstellung eine erste Gestaltung der Bearbeitungsstation, veranschaulicht in verschiedenen Positionen,
- Fig. 5: in einer schematischen Darstellung eine Bearbeitungslinie für die Serienfertigung mit einer Vielzahl von Bearbeitungsstationen gemäß der in den Fig. 1 bis 4 veranschaulichten prinzipiellen Gestaltung,
- Fig. 6: für eine konkrete Gestaltung der Bearbeitungsstation bzw. der Bearbeitungskabine, die die Bearbeitungsstation aufnimmt, die Anordnung der von der Bearbeitungsstation aufgenommenen beiden Bauteile für einen Bearbeitungszustand gemäß Fig. 1,
- Fig. 7: die Bearbeitungsstation mit den beiden von dieser aufgenommenen Bauteilen, in einer gegenüber der Darstellung nach Fig. 6 vergrößerten Darstellung,
- Fig. 8: die Anordnung gemäß Fig. 7 in einer Seitenansicht,
- Fig. 9: die Anordnung gemäß der Fig. 7 und 8 in einer Draufsicht,
- Fig. 10: die Anordnung gemäß Fig. 9, allerdings bei um 90° um eine horizontale Achse gedrehter Anordnung des einen von der Bearbeitungsstation aufgenommenen Bauteils,
- Fig. 11: die Anordnung gemäß der Fig. 7 und 8, veranschaulicht für die vertikale Endstellung des bearbeiteten Bauteils, vor dem Ausgeben des bearbeiteten Bauteils zur Bestückungs- und Entnahmestelle sowie Übernehmen des neu zu bearbeitenden Bauteils von der Bestückungs- und Entnahmestelle.

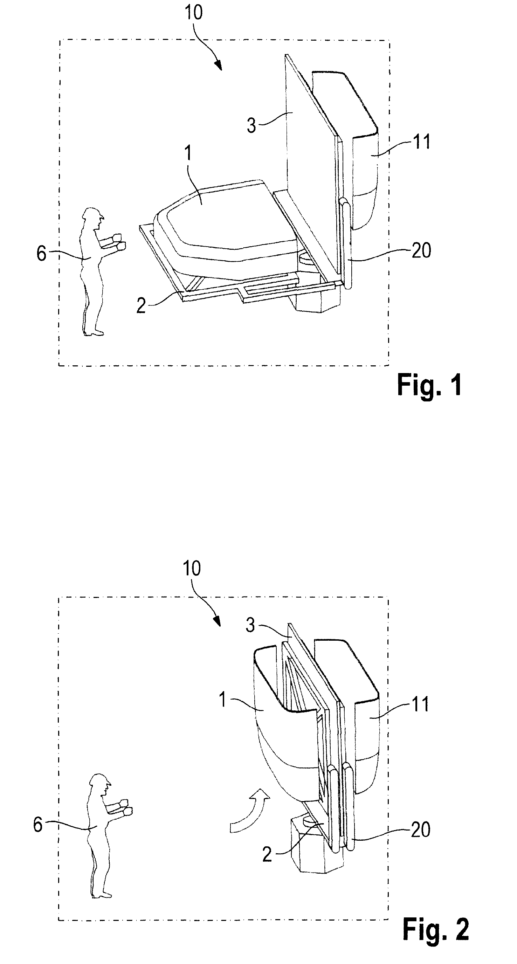

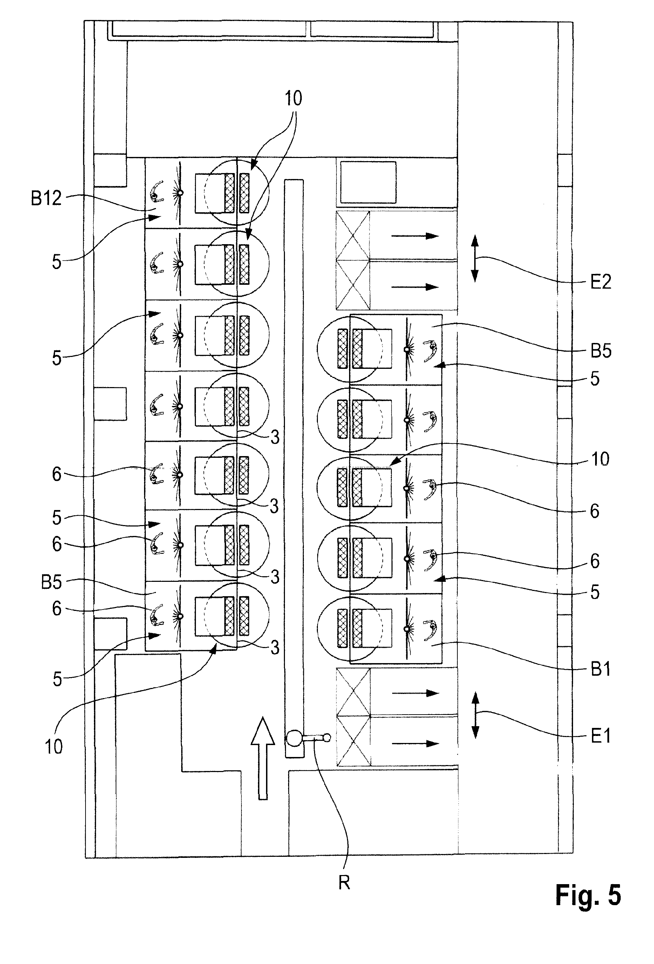

Fig. 1 zeigt eine Bearbeitungsstation 10 nach der Erfindung in einer zur ganzflächigen Bearbeitung eines Bauteils 1, zum Beispiel einer Fronthaube eines Kraftfahrzeugs, geeigneten Positionierung, im Ausführungsbeispiel zum Finishing der Oberfläche der Fronthaube (Schleifen von Unebenheiten). Das Bauteil 1 ist mit einer Aufnahme 2 in im Wesentlichen horizontaler Position fixiert. Die Bearbeitungsstation 10 ist in der weitgehend gegen austretenden Lärm, Staub und Ähnliches abgeschlossenen Bearbeitungskabine 5 (siehe Fig. 5) untergebracht, innerhalb der die Bearbeitung erfolgt.

Gegenüber einer Beschickungslinie 4 (siehe Fig. 5) ist die Bearbeitungskabine 5 durch eine senkrecht stehende Trennwand 3, die Teil der Bearbeitungsstation 10 ist, weitgehend abgeschlossen. Auf einer zweiten Aufnahme 20 ist ein weiteres Bauteil 11, somit eine weitere Fronthaube, die zur anschließenden Bearbeitung nach Abschluss der Bearbeitung des Bauteils 1 ansteht, aufgespannt.

In Fig. 5 ist mit der Bezugsziffer 6 ein Werker 6 dargestellt, der in der jeweiligen Bearbeitungskabine 5 arbeitet und auf der der Trennwand abgewandten Seite der Bearbeitungskabine 5 steht.

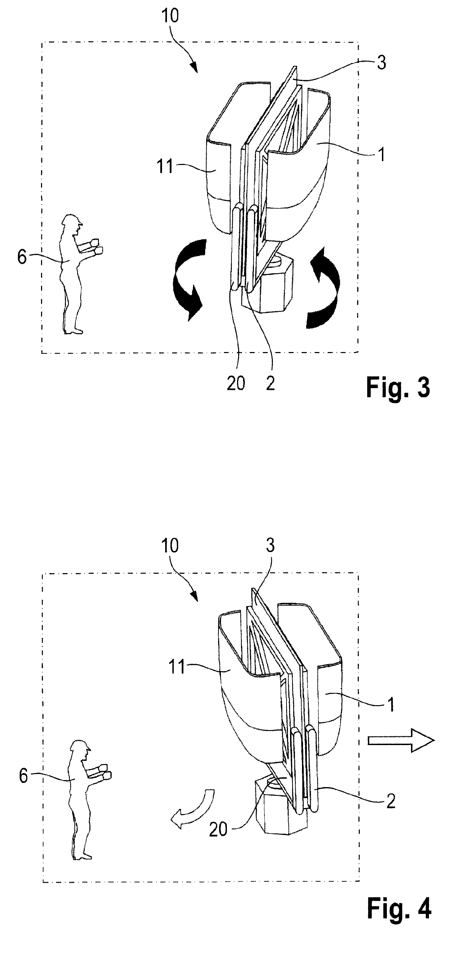

Ist dieser Bearbeitungsvorgang des Bauteils 1 abgeschlossen, wird, ausgehend von der Stellung der Aufnahme 2 gemäß Fig. 1, die Aufnahme 2 mit dem aufgespannten Bauteil 1 um 90° um eine horizontale Achse verschwenkt (siehe Pfeil in Fig. 2) und somit in eine im Wesentlichen parallele Position zur Trennwand 3 gebracht. Anschließend werden das bearbeitete Bauteil 1 in der es tragenden Aufnahme 2 zusammen mit der Trennwand 3 und dem zur Bearbeitung anstehenden Bauteil 11 auf der zweiten Aufnahme 20 auf der Bearbeitungsstation 10 um 180° um eine horizontale Achse verdreht - siehe Fig. 3. Sobald der Verdrehvorgang abgeschlossen ist, kann einerseits das zu Ende bearbeitete Bauteil 1 durch einen Handhabungsroboter abgenommen werden; gleichzeitig kann das zur Bearbeitung anstehende Bauteil 11 in der zweiten Aufnahme 20 aus der vertikalen Position in eine im Wesentlichen horizontale Position (siehe Pfeil in Fig. 4) zur frei zugänglichen Bearbeitung verschwenkt werden, womit das Teil 11 die Position einnimmt, die zur Fig. 1 für das Teil 1 veranschaulicht ist.

Anschließend an die Entnahme des bearbeiteten Bauteils 1 bestückt der Handhabungsroboter die Aufnahme 2 erneut mit einem zu bearbeitenden Bauteil.

In Fig. 5 ist schematisch eine Bearbeitungslinie mit mehreren Bearbeitungsstationen 10 der vorstehend beschriebenen Art dargestellt. Ein Handhabungsroboter R führt den in zwei Linien angeordneten Bearbeitungsstationen 10 die dem Handhabungsroboter R zur Bearbeitung in Pfeilrichtung zugeführten Bauteile einzeln zu. In den einzelnen Bearbeitungsstationen 10, dort zur Veranschaulichung der konkreten Anordnung als Bearbeitungsstation B1 bis B12 bezeichnet, erfolgt die Bestückung bzw. die Entnahme der Bauteile und deren Bearbeitung in der anhand der Fig. 1 bis 4 vorstehend beschriebenen Art und Weise. Die Entnahme der bearbeiteten Bauteile aus der Bearbeitungslinie kann über Entnahmestationen E1 bzw. E2 erfolgen.

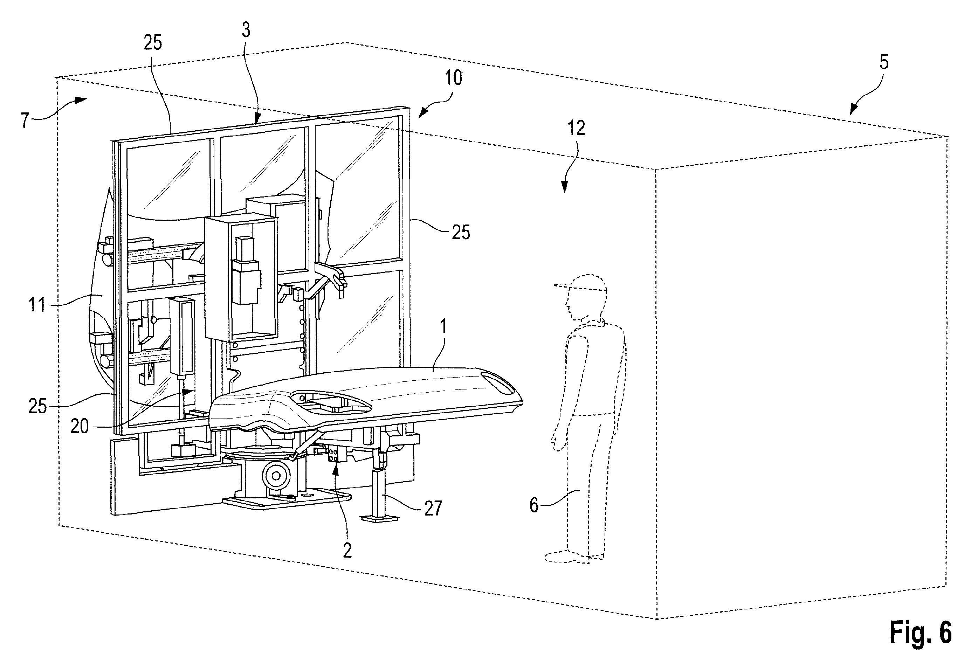

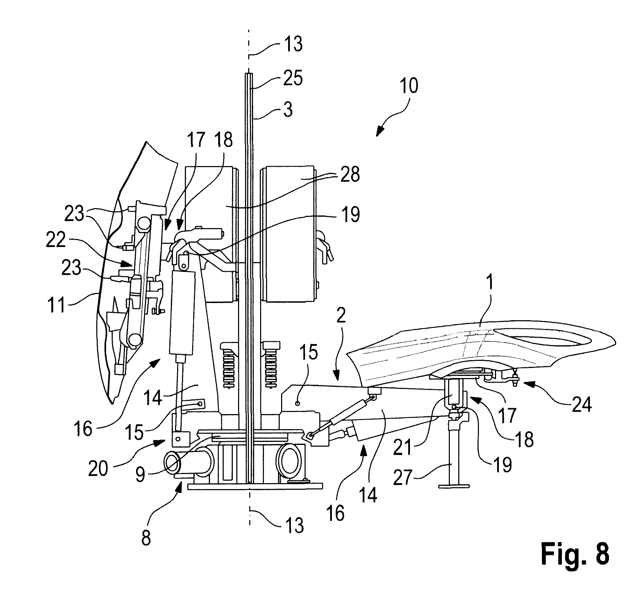

Ein spezifisches Ausführungsbeispiel der erfindungsgemäßen Bearbeitungsstation 10 ist in den Fig. 6 bis 11 veranschaulicht:

Die Bearbeitungsstation 10 weist einen mittels eines Antriebs 8 drehbaren Drehtisch 9 auf. Dieser ist um eine vertikale Drehachse 13 drehbar, die gleichzeitig die Drehachse der Bearbeitungsstation 10 darstellt. In diesem Drehtisch 9 sind die Trennwand 4 sowie die Aufnahme 2 und die Aufnahme 20 gelagert. Die beiden Aufnahmen 2 und 20 weisen jeweils einen Hebel 14 auf. Der jeweilige Hebel 14 ist um eine im Drehtisch 9 angeordnete, horizontale Achse 15 schwenkbar gelagert. Verschwenkt wird der jeweilige Hebel 14 relativ zum Drehtisch 9 mittels eines Antriebs 16, der eine Kolben-ZylinderEinheit aufweist und fluidbetrieben ist. Im Bereich seines dem Drehtisch 9 abgewandten Endes ist in dem jeweiligen Hebel 14 ein Drehteller 17 gelagert. Dieser dient der schwenkbaren Lagerung des Bauteils 1 bzw. 11, vorliegend einer zu schleifenden Fronthaube eines Personenkraftwagens. Der eine Drehteller 17 nimmt das in der Bearbeitungskabine 5 befindliche Bauteil 1, das somit zu bearbeiten ist, derart auf, dass das Bauteil 1 in der Bearbeitungsposition oberhalb des diesem Bauteil 1 zugeordneten Hebels 15 angeordnet ist und im Wesentlichen horizontal orientiert ist.

Eine den jeweiligen Drehteller 17 aufweisende Dreheinrichtung 18 ist im Bereich des freien Endes des diesem zugeordneten Hebels 14 schwenkbar in diesem gelagert. Die Dreheinrichtung 18 ist hierbei bezüglich des Hebels 14 um eine Achse 19 schwenkbar, die parallel zur Schwenkachse 15 des Hebels 14 im Drehtisch 9 ist. Diese Schwenkbewegung wird mittels eines Antriebs 21 bewerkstelligt.

Die jeweilige Aufnahme 2 bzw. 20, konkret eine mit dem Drehteller 17 verbundenes Aufnahmeteil 22, weist ein gelochtes Leichtbauprofil zur Aufnahme des Bauteils 1 bzw. 11 auf. Dieses Aufnahmeteil 22 ist nur für die Aufnahme 20 gezeigt, bei der nur eine Hälfte des Bauteils 1 veranschaulicht ist, sodass das Aufnahmeteil 22 und die hiermit in Bezug stehende Konstruktion sichtbar ist. Die jeweilige Aufnahme 2 bzw. 20 weist insbesondere im Bereich von Drehteller 17 und Aufnahmeteil 22 Justier- und/oder Klemmelemente 23 zum Verspannen bzw. Befestigen des Bauteils 1 bzw. 11 an der Aufnahme 2 bzw. 20 auf.

Der Dreheinrichtung 18 sind schließlich Mittel 24 zum Bremsen des Drehtellers 17 zugeordnet. Dies ermöglicht es dem Werker 6 den Drehteller 17 in gewünschten Positionen festzulegen und damit das Bauteil 1 in gewünschten Positionen festzulegen.

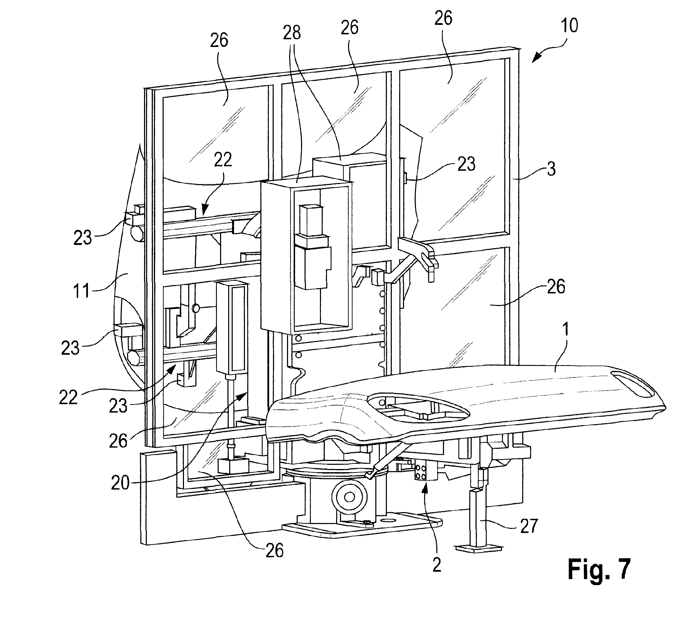

Die Trennwand 3 ist umlaufend mit Abdichtmitteln 25 zum partikeldichten, insbesondere staubdichten Abdichten der Trennwand 3 zur benachbarten Struktur der Bearbeitungskabine 5 versehen. Insbesondere der Darstellung der Fig. 7 ist zu entnehmen, dass die Trennwand 3 als Rahmenkonstruktion ausgebildet ist und Flächenelemente 26 aus Plexiglas trägt, sodass der Werker durch die Trennwand 3 blicken kann und somit über den Beschickungsvorgang betreffend das Bauteil 11 der Aufnahme 20 informiert ist.

Die Fig. 6 bis 8 zeigen den Zustand, bei dem die Aufnahme 2 das zugeordnete Bauteil 1 in der Bearbeitungsposition trägt, somit das Bauteil 1 im Wesentlichen horizontal angeordnet ist. Das Bauteil 1, somit die Fronthaube, ist mit deren Vorderseite dem Werker 6 zugewandt, der die Fronthaube somit auf deren Oberseite bearbeiten, konkret schleifen kann. Außerhalb der Bearbeitungskabine 5 ist im Bereich der zweiten Aufnahme 20 ein weiteres Bauteil 11, somit eine weitere Fronthaube positioniert und wird von der zweiten Aufnahme 20 in deren vertikalen Stellung aufgenommen, womit auch das Bauteil 11, somit die Fronthaube vertikal orientiert ist, mit der Frontseite nach unten gerichtet.

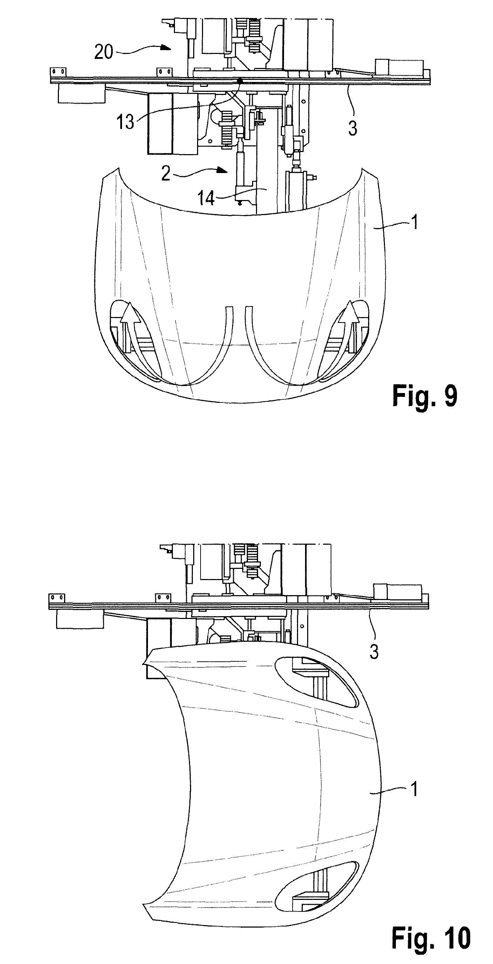

Fig. 9 zeigt die normale Ausrichtung des Bauteils 1, somit der Fronthaube, die der Ausrichtung der Fronthaube gemäß den Fig. 6 bis 8 entspricht. Die Dreheinrichtung 18 ermöglicht ein Schwenken des Bauteils 1, somit der Fronthaube in entgegengesetzten Richtungen, wie durch die Pfeile in Fig. 9 veranschaulicht, sodass, bei einer Drehung um jeweils 90° aus der Ausgangsstellung, die Fronthaube mit der Front einmal nach rechts, einmal nach links gerichtet angeordnet ist. Die Ausrichtung nach rechts ist in Fig. 10 veranschaulicht.

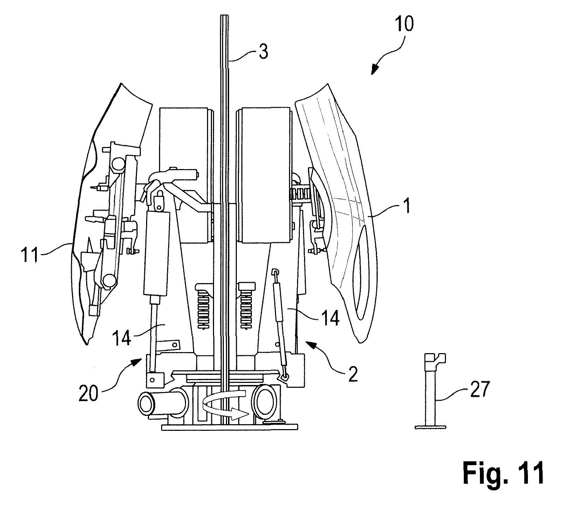

Ist das Bauteil 1, somit die Fronthaube fertig bearbeitet, wird sie in die Arbeitsposition gemäß der Fig. 6 bis 9 zurückverfahren und anschließend die Aufnahme 2 nach oben geschwenkt, bei gleichzeitigem Schwenken der von der Aufnahme 2 aufgenommenen Fronthaube um etwa 180° mittels des Antriebs 21, der die Schwenkung um die Achse 19 bewirkt. Es stellt sich damit die Anordnung, wie in Fig. 11 gezeigt, dar.

In dieser bezüglich der Trennwand 3 symmetrischen Anordnung der beiden Bauteile 1 und 11, somit der beiden Fronthauben, erfolgt die Drehung der Bearbeitungsstation 10 um 180° bezüglich der vertikalen Drehachse 13, sodass nunmehr das von der Aufnahme 20 aufgenommene Bauteil 11 an die Stelle des von der Aufnahme 2 aufgenommenen Bauteils 1 tritt. Es erfolgt die Entnahme des bearbeiteten Bauteils 1 von der Aufnahme 2 und das Bestücken dieser Aufnahme 2 mit einem neuen Bauteil, das zu bearbeiten ist, während das innerhalb der Bearbeitungskabine 5 befindliche Bauteil vom Werker 6 im beschriebenen Sinne bearbeitet wird.

Mit der Bezugsziffer 27 ist eine innerhalb der Bearbeitungskabine 5 befindliche Stütze bezeichnet. Diese ist im Boden der Bearbeitungskabine 5 gelagert und erstreckt sich vertikal. Auf die Stütze 27 wird der Hebel 14 in der Bearbeitungsposition des Bauteils 1 abgelegt, womit eine schwingungsfreie Lagerung der Bearbeitungsstation 10 bei Ausübung einer Bearbeitungskraft durch den Werker 6 auf das Bauteil 1 gewährleistet ist.

Die Abdichtmittel 25 der Trennwand 3 stellen sicher, dass beim Arbeiten am Bauteil 1, insbesondere beim Schleifen des Bauteils 1, kein Schleifstaub aus dem durch die Bearbeitungskabine 6 gebildeten Bearbeitungsraum 12 gelangen kann. Es ist insbesondere vorgesehen, dass im Bodenbereich der Bearbeitungskabine 5 eine Absaugung für den beim Schleifen entstehenden Staub angeordnet ist. Die Abdichtmittel 25 weisen insbesondere eine Bürstenstruktur auf.

Vorzugsweise lassen sich mittels einer Fußschaltereinrichtung die vorbeschriebenen Antriebe der Bearbeitungsstation 10 elektrisch durch den Werker 6 betätigen.

In der Trennwand 3 sind auf beiden Seiten Steuerschränke 28 gelagert. Diese nehmen Komponenten zum Ansteuern der Komponenten der Bearbeitungsstation 10 auf.

## Patentansprüche

1. Bearbeitungsstation (10) für Bauteile (1, 11), zur Anordnung der Bearbeitungsstation (10) in einer Bearbeitungskabine (5), wobei die Bearbeitungsstation (10) eine dreh- und schwenkbar angeordnete Aufnahme (2) für ein Bauteil (1) und eine in einer Drehachse (13) der Bearbeitungsstation (10) angeordnete vertikale Trennwand (3) zur Abtrennung eines Bearbeitungsraums (12) von einer Bestückungs- und Entnahmestelle für Bauteile (1, 11) aufweist, **dadurch gekennzeichnet, dass** die Aufnahme (2) für das Bauteil (1) aus einer vertikalen, im Wesentlichen parallel zur Trennwand (3) verlaufenden Position in die im Wesentlichen horizontale, zur Bearbeitung frei zugänglichen Bearbeitungsposition verschwenkbar ist und umgekehrt, sowie die Aufnahme (2) in der vertikalen Position, zusammen mit der Trennwand (3), um 180° aus dem Bearbeitungsraum (12) in eine Bestückungs- und Entnahmeposition drehbar ist.

2. Bearbeitungsstation nach Anspruch 1, **dadurch gekennzeichnet, dass** diese auf der der (ersten) Aufnahme (2) abgewandten Seite der Trennwand (3) eine weitere (zweite) Aufnahme (20) für ein weiteres Bauteil (11) aufweist, wobei die zweite Aufnahme (20) für das weitere Bauteil (11) aus einer vertikalen, im Wesentlichen parallel zur Trennwand (3) verlaufenden Position in eine im Wesentlichen horizontale Position verschwenkbar ist und umgekehrt, sowie die zweite Aufnahme (20) in der vertikalen Position zusammen mit der Trennwand (3) um 180° von der Bestückungs- und Entnahmestelle in eine Bearbeitungsposition in der Bearbeitungskabine (5) drehbar ist.

3. Bearbeitungsstation nach Anspruch 1 oder 2, **dadurch gekennzeichnet, dass** diese einen um die Drehachse (13) der Bearbeitungsstation (10) drehbaren, mittels eines Antriebs (8) drehbaren Drehtisch (9) aufweist, in dem die erste Aufnahme (2) und die Trennwand (3) gelagert sind.

4. Bearbeitungsstation nach Anspruch 3, **dadurch gekennzeichnet, dass** in dem Drehtisch (9) die zweite Aufnahme (20) gelagert ist.

5. Bearbeitungsstation nach einem der Ansprüche 1 bis 4, **dadurch gekennzeichnet, dass** die erste Aufnahme (2) und/oder die zweite Aufnahme (20) um eine horizontale Achse (15) schwenkbar gelagert ist.

6. Bearbeitungsstation nach Anspruch 5, **dadurch gekennzeichnet, dass** die erste Aufnahme (2) und/oder die zweite Aufnahme (20) einen Hebel (14) aufweist, der im Drehtisch (9) um die horizontale Achse (15) schwenkbar gelagert ist, sowie ein Antrieb (16) zum Schwenken des Hebels (14) relativ zum Drehtisch (9) vorgesehen ist.

7. Bearbeitungsstation nach einem der Ansprüche 1 bis 6, **dadurch gekennzeichnet, dass** der Hebel (14), im Bereich seines dem Drehtisch (9) abgewandten Endes, eine Dreheinrichtung (18) mit einem Drehteller (17) zur schwenkbaren Lagerung des Bauteils (1, 11) aufweist.

8. Bearbeitungsstation nach Anspruch 7, **dadurch gekennzeichnet, dass** der Drehteller (17) das Bauteil (1, 11) derart aufnimmt, dass es in der Bearbeitungsposition oberhalb des Hebels (14) angeordnet ist.

9. Bearbeitungsstation nach Anspruch 7 oder 8, **dadurch gekennzeichnet, dass** die Dreheinrichtung (18) im Bereich des freien Endes des Hebels (14) schwenkbar in diesem gelagert ist, wobei die Dreheinrichtung (18) bezüglich des Hebels (14) um eine Achse (19) schwenkbar ist, die parallel zur Schwenkachse (15) des Hebels (14) im Drehtisch (9) ist.

10. Bearbeitungsstation nach einem der Ansprüche 1 bis 9, **dadurch gekennzeichnet, dass** die jeweilige Aufnahme (2, 20) ein Aufnahmeteil (22) aufweist, das als gelochtes Leichtbauprofil ausgebildet ist.

11. Bearbeitungsstation nach einem der Ansprüche 1 bis 10, **dadurch gekennzeichnet, dass** die jeweilige Aufnahme (2, 20) bzw. der jeweilige Drehteller (17) Justier- und/oder Klemmeelemente (23) zum Verspannen bzw. Befestigen des Bauteils (1, 11) an der Aufnahme (2, 20) bzw. dem Drehteller (17) aufweist.

12. Bearbeitungsstation nach einem der Ansprüche 3 bis 11, **dadurch gekennzeichnet, dass** der Antrieb (8) für den Drehtisch (9) und/oder der Antrieb (16) zum Schwenken des Hebels (14) relativ zum Drehtisch (9) und/oder der Antrieb (18) zum Schwenken des Drehtellers (17) relativ zum Hebel (14) und/oder der Antrieb (18) für den Drehteller (17) mittels einer Fußschaltereinrichtung elektrisch betätigbar ist bzw. sind.

13. Bearbeitungsstation nach einem der Ansprüche 7 bis 12, **dadurch gekennzeichnet, dass** Mittel (24) zum Bremsen des Drehtellers (17) vorgesehen sind.

14. Bearbeitungsstation nach einem der Ansprüche 1 bis 13, **dadurch gekennzeichnet, dass** die Trennwand (3) umlaufend Abdichtmittel (25) zum partikeldichten Abdichten der Trennwand (3) zur benachbarten Struktur der Bearbeitungskabine (5) aufweist.

15. Bearbeitungsstation nach einem der Ansprüche 1 bis 14, **dadurch gekennzeichnet, dass** die Bestückungs- und Entnahmestelle für Bauteile (1, 11) Bestandteil einer Bestückungs- und Entnahmelinie (4) ist, entlang derer mehrere Bearbeitungsstationen (10) hintereinander angeordnet sind.

## Claims

1. Processing station (10) for components (1, 11), for arrangement of the processing station (10) in a processing cubicle (5), wherein the processing station (10) has a rotatably and pivotably arranged receptacle (2) for a component (1), and a vertical partition (3), which is arranged on an axis of rotation (13) of the processing station (10), for separating a processing chamber (12) from an assembly and removal point for components (1, 11), **characterized in that** the receptacle (2) for the component (1) is pivotable from a vertical position running substantially parallel to the partition (3) into a substantially horizontal processing position which is freely accessible for the processing, and vice versa, and the receptacle (2) is rotatable in the vertical position, together with the partition (3), through 180° from the processing chamber (12) into an assembly and removal position.

2. Processing station according to Claim 1, **characterized in that** said processing station has a further (second) receptacle (20) for a further component (11) on that side of the partition (3) which faces away from the (first) receptacle (2), wherein the second receptacle (20) for the further component (11) is pivotable from a vertical position running substantially parallel to the partition (3) into a substantially horizontal position, and vice versa, and the second receptacle (20) is rotatable in the vertical position together with the partition (3) through 180° from the assembly and removal point into a processing position in the processing cubicle (5).

3. Processing station according to Claim 1 or 2, **characterized in that** said processing station has a rotary table (9) which is rotatable about the axis of rotation (13) of the processing station (10), is rotatable by means of a drive (8) and in which the first receptacle (2) and the partition (3) are mounted.

4. Processing station according to Claim 3, **characterized in that** the second receptacle (20) is mounted in the rotary table (9).

5. Processing station according to one of Claims 1 to 4, **characterized in that** the first receptacle (2) and/or the second receptacle (20) are/is mounted pivotably about a horizontal axis (15).

6. Processing station according to Claim 5, **characterized in that** the first receptacle (2) and/or the second receptacle (20) have/has a lever (14) which is mounted in the rotary table (9) so as to be pivotable about the horizontal axis (15), and a drive (16) is provided for pivoting the lever (14) relative to the rotary table (9).

7. Processing station according to one of Claims 1 to 6, **characterized in that** the lever (14), in the region of its end facing away from the rotary table (9), has a rotary device (18) with a rotary plate (17) for the pivotable mounting of the components (1, 11).

8. Processing station according to Claim 7, **characterized in that** the rotary plate (17) receives the component (1, 11) in such a manner that said component is arranged above the lever (14) in the processing position.

9. Processing station according to Claim 7 or 8, **characterized in that** the rotary device (18) is mounted pivotably in the lever (14) in the region of the free end thereof, wherein the rotary device (18) is pivotable with respect to the lever (14) about an axis (19) which is parallel to the pivot axis (15) of the lever (14) in the rotary table (9).

10. Processing station according to one of Claims 1 to 9, **characterized in that** the respective receptacle (2, 20) has a receiving part (22) which is designed as a perforated lightweight profile.

11. Processing station according to one of Claims 1 to 10, **characterized in that** the respective receptacle (2, 20) of the respective rotary plate (17) has adjustment and/or clamping elements (23) for bracing or fastening the component (1, 11) on the receptacle (2, 20) or on the rotary plate (17).

12. Processing station according to one of Claims 3 to 11, **characterized in that** the drive (8) for the rotary table (9) and/or the drive (16) for pivoting the lever (14) relative to the rotary table (9) and/or the drive (18) for pivoting the rotary plate (17) relative to the lever (14) and/or the drive (18) for the rotary plate (17) are/is electrically actuable by means of a foot switch device.

13. Processing station according to one of Claims 7 to 12, **characterized in that** means (24) are provided for braking the rotary plate (17).

14. Processing station according to one of Claims 1 to 13, **characterized in that** the partition (3) has sealing means (25) in an encircling manner for the particle-tight sealing of the partition (3) with respect to the adjacent structure of the processing cubicle (5).

15. Processing station according to one of Claims 1 to 14, **characterized in that** the assembly and removal point for components (1, 11) is part of an assembly and removal line (4), along which a plurality of processing stations (10) are arranged one behind another.

## Revendications

1. Poste de traitement (10) pour composants (1, 11), pour l'agencement du poste de traitement (10) dans une cabine de traitement (5), le poste de traitement (10) présentant un logement (2) pour un composant (1) disposé de manière à pouvoir tourner et pivoter et une paroi de séparation verticale (3) disposée dans un axe de rotation (13) du poste de traitement (10) pour séparer un espace de traitement (12) d'une zone de chargement et de prélèvement pour composants (1, 11),
**caractérisé en ce que**
le logement (2) pour le composant (1) peut pivoter d'une position verticale, s'étendant essentiellement parallèlement à la paroi de séparation (3), dans la position de traitement essentiellement horizontale librement accessible pour le traitement, et inversement, et le logement (2) peut pivoter dans la position verticale, conjointement avec la paroi de séparation (3), de 180° hors de l'espace de traitement (12) dans une position de chargement et de prélèvement.

2. Poste de traitement selon la revendication 1,
**caractérisé en ce que** celui-ci, sur le côté de la paroi de séparation (3) opposé au (premier) logement (2), présente un (deuxième) logement supplémentaire (20) pour un composant supplémentaire (11), le deuxième logement (20) pour le composant supplémentaire (11) pouvant pivoter d'une position verticale, s'étendant essentiellement parallèlement à la paroi de séparation (3), dans une position essentiellement horizontale et inversement, et le deuxième logement (20) pouvant tourner, dans la position verticale, conjointement avec la paroi de séparation (3), de 180° depuis la zone de chargement et de prélèvement dans une position de traitement dans la cabine de traitement (5).

3. Poste de traitement selon la revendication 1 ou 2,
**caractérisé en ce que** celui-ci présente une table tournante (9) pouvant tourner autour de l'axe de rotation (13) du poste de traitement (10), pouvant tourner au moyen d'un entraînement (8), dans laquelle sont supportés le premier logement (2) et la paroi de séparation (3).

4. Poste de traitement selon la revendication 3,
**caractérisé en ce que** le deuxième logement (20) est supporté dans la table tournante (9).

5. Poste de traitement selon l'une quelconque des revendications 1 à 4, **caractérisé en ce que** le premier logement (2) et/ou le deuxième logement (20) sont supportés de manière pivotante autour d'un axe horizontal (15).

6. Poste de traitement selon la revendication 5,
**caractérisé en ce que** le premier logement (2) et/ou le deuxième logement (20) présentent un levier (14) qui est supporté dans la table tournante (9) de manière à pouvoir pivoter autour de l'axe horizontal (15), et un entraînement (16) est prévu pour faire pivoter le levier (14) par rapport à la table tournante (9).

7. Poste de traitement selon l'une quelconque des revendications 1 à 6, **caractérisé en ce que** le levier (14), dans la région de son extrémité opposée à la table tournante (9), présente un dispositif rotatif (18) avec un plateau tournant (17) pour le support pivotant du composant (1, 11).

8. Poste de traitement selon la revendication 7,
**caractérisé en ce que** le plateau tournant (17) reçoit le composant (1, 11) de telle sorte qu'il soit disposé dans la position de traitement au-dessus du levier (14).

9. Poste de traitement selon la revendication 7 ou 8,
**caractérisé en ce que** le dispositif rotatif (18) est supporté dans la région de l'extrémité libre du levier (14) de manière à pouvoir pivoter dans celui-ci, le dispositif rotatif (18) pouvant pivoter par rapport au levier (14) autour d'un axe (19) qui est parallèle à l'axe de pivotement (15) du levier (14) dans la table tournante (9).

10. Poste de traitement selon l'une quelconque des revendications 1 à 9, **caractérisé en ce que** le logement respectif (2, 20) présente une partie de réception (22) qui est réalisée sous forme de profilé perforé de construction légère.

11. Poste de traitement selon l'une quelconque des revendications 1 à 10, **caractérisé en ce que** le logement respectif (2, 20) ou le plateau tournant respectif (17) présente des éléments d'ajustement et/ou de serrage (23) pour serrer ou fixer le composant (1, 11) au logement (2, 20) ou au plateau tournant (17).

12. Poste de traitement selon l'une quelconque des revendications 3 à 11, **caractérisé en ce que** l'entraînement (8) pour la table tournante (9) et/ou l'entraînement (16) pour faire pivoter le levier (14) par rapport à la table tournante (9) et/ou l'entraînement (18) pour faire pivoter le plateau tournant (17) par rapport au levier (14) et/ou l'entraînement (18) pour le plateau tournant (17) peut ou peuvent être actionnés électriquement au moyen d'un dispositif de commutation à pédale.

13. Poste de traitement selon l'une quelconque des revendications 7 à 12, **caractérisé en ce que** des moyens (24) pour freiner le plateau tournant (17) sont prévus.

14. Poste de traitement selon l'une quelconque des revendications 1 à 13, **caractérisé en ce que** la paroi de séparation (3) présente sur le pourtour des moyens d'étanchéité (25) pour l'étanchéité étanche aux particules de la paroi de séparation (3) vis-à-vis de la structure adjacente de la cabine de traitement (5).

15. Poste de traitement selon l'une quelconque des revendications 1 à 14, **caractérisé en ce que** la zone de chargement et de prélèvement pour composants (1, 11) fait partie d'une chaîne de chargement et de prélèvement (4) le long de laquelle plusieurs postes de traitement (10) sont disposés les uns derrière les autres.
